Europäisches Patentamt

European Patent Office

Office européen des brevets

(11) Veröffentlichungsnummer: **0 462 362 A2**

# (12) EUROPÄISCHE PATENTANMELDUNG

(21) Anmeldenummer: **91103812.3**

(22) Anmeldetag: **13.03.91**

(51) Int. Cl.5: **G02B 6/32, G02B 6/36**

(30) Priorität: **21.06.90 DE 4019733**

(43) Veröffentlichungstag der Anmeldung:
**27.12.91 Patentblatt 91/52**

(84) Benannte Vertragsstaaten:
**AT CH DE FR GB LI NL**

(71) Anmelder: **AEG KABEL Aktiengesellschaft**
**Bonnenbroicher Strasse 2-14**
**W-4050 Mönchengladbach 2(DE)**

(72) Erfinder: **Eickhoff, Wolfgang, Dr.**
**Winklerstrasse 4a**
**W-1000 Berlin 33(DE)**
Erfinder: **Bruland, Alexander**
**An der Brölhecke 12**
**W-5010 Bergheim/Erft(DE)**

(54) **Optische Verbindung für Lichtwellenleiter.**

(57) Bei einer optischen Verbindung für Lichtwellenleiter, bei der die Lichtwellenleiter durch eine Steckverbindung miteinander verbunden werden, ist vorgesehen, daß Kopplungselemente vorgesehen sind, in die die Steckverbindungselemente einsteckbar sind.

FIG. 8

In der Lichtwellenleitertechnik erfolgt die Verbindung von zwei Lichtwellenleitern im allgemeinen durch eine Steckverbindung. Vor allem bei der optischen Verbindung von mehreren Lichtwellenleitern besteht das Problem, daß die Lichtwellenleiter in der Verbindung genau fixiert und justiert sein müssen, da die Stirnflächen der miteinander zu verbindenden Lichtwellenleiter im Verbindungsbereich einander genau gegenüber liegen müssen.

Der Erfindung liegt die Aufgabe zugrunde, eine optische Verbindung für Lichtwellenleiter anzugeben, die eine genaue Fixierung und Justierung der miteinander zu verbindenden Lichtwellenleiter ermöglicht und die außerdem die Möglichkeit bietet, die optische Verbindung leicht zu montieren und Teile der optischen Verbindung leicht auszutauschen. Diese Aufgabe wird erfindungsgemäß durch eine optische Verbindung mit den Merkmalen des Anspruchs 1 gelöst.

Die Erfindung wird im folgenden an einem Ausführungsbeispiel erläutert.

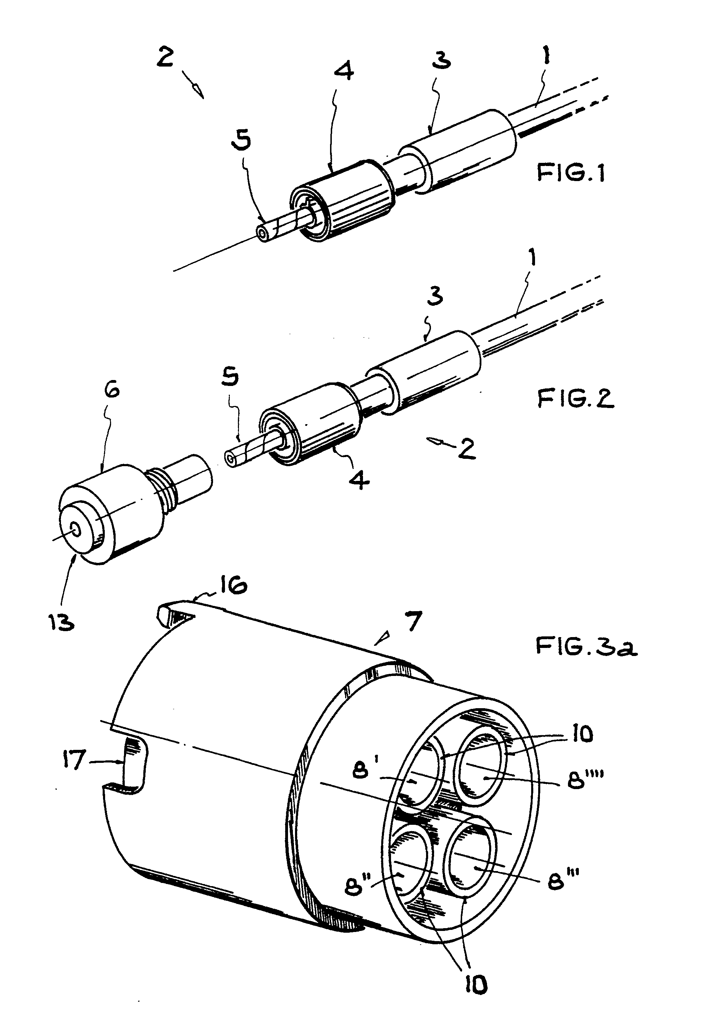

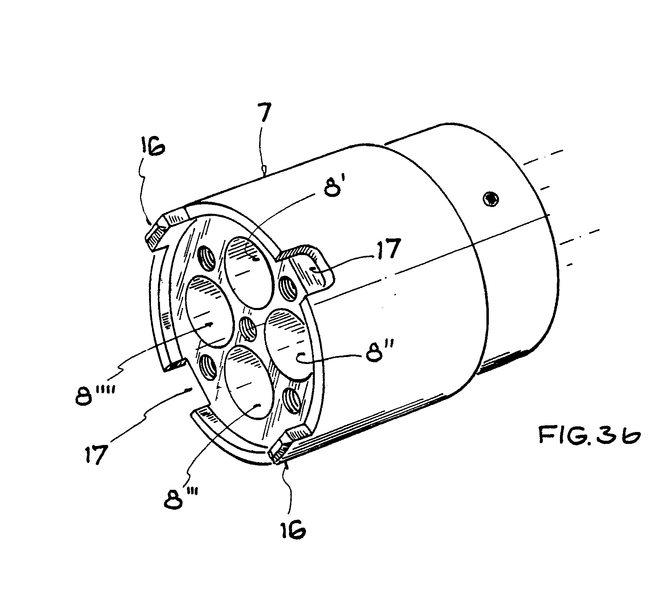

Die Figur 1 zeigt ein Lichtwellenleiterkabel 1 mit einem Lichtwellenleiter (optische Ader) sowie einem optischen Stecker 2, der mit dem Lichtwellenleiterkabel 1 verbunden ist. Der optische Stecker 2 besteht im Ausführungsbeispiel der Figur 1 aus einem Steckerkörper 3, einer Überwurfmutter 4 und einem Steckerstift 5, in dem der Lichtwellenleiter justiert und fixiert ist.

Das durch das Lichtwellenleiterkabel 1 transportierte Licht tritt an der Stirnseite des Steckerstiftes 5 aus. Das mit dem Lichtwellenleiterkabel 1 zu verbindende und in der Figur 1 nicht dargestellte Lichtwellenleiterkabel (optische Kabel) weist ebenfalls einen Stecker auf, der im allgemeinen als Gegenstecker bezeichnet wird. Der Gegenstecker kann in derselben Weise ausgebildet sein wie der Stecker der Figur 1 oder er kann auch eine andere Bauart aufweisen. Wesentlich ist nur, daß Stecker und Gegenstecker zusammenpassen und eine gemeinsame Steckverbindung ergeben.

Bei der Anordnung der Figur 2 ist zusätzlich zum optischen Stecker 2 der Figur 1 ein Körper 6 vorgesehen, der zur Aufnahme einer optischen Linse oder eines optischen Linsensystems dient und mit dem optischen Stecker 2 verbindbar ist. Zum Verbinden des Körpers 6 mit dem optischen Stecker 2 empfiehlt sich eine lösbare Verbindung, die zum Beispiel durch Aufstecken des Körpers 6 auf den Steckerstift 5 hergestellt wird. Im Ausführungsbeispiel der Figur 2 ist der aufgesteckte Körper 6 mit der Überwurfmutter 4 verschraubt. Die im Körper 6 befindliche Linse (Linsensystem) hat die Aufgabe, den aus dem Lichtwellenleiter (Faser) austretenden Lichtstrahl aufzuweiten und als quasiparalleles Strahlenbündel weiterzuführen.

Die Figur 3 (3a, 3b) zeigt ein Kopplungselement 7 nach der Erfindung, welches zur Aufnahme mehrerer optischer Stecker 2 mit Linsenkörper 6 (Linsenaufsatz) dient. Im Ausführungsbeispiel der Figur 3 dient das Kopplungslement 7 zur Aufnahme von vier optischen Steckern 2 mit Linsenkörpern 6. Um die vier optischen Stecker 2 mit Linsenkörper 6 aufnehmen zu können, ist das Kopplungselement 7 der Figur 3 mit vier durchgehenden Bohrungen (8', 8'', 8''', 8'''') versehen.

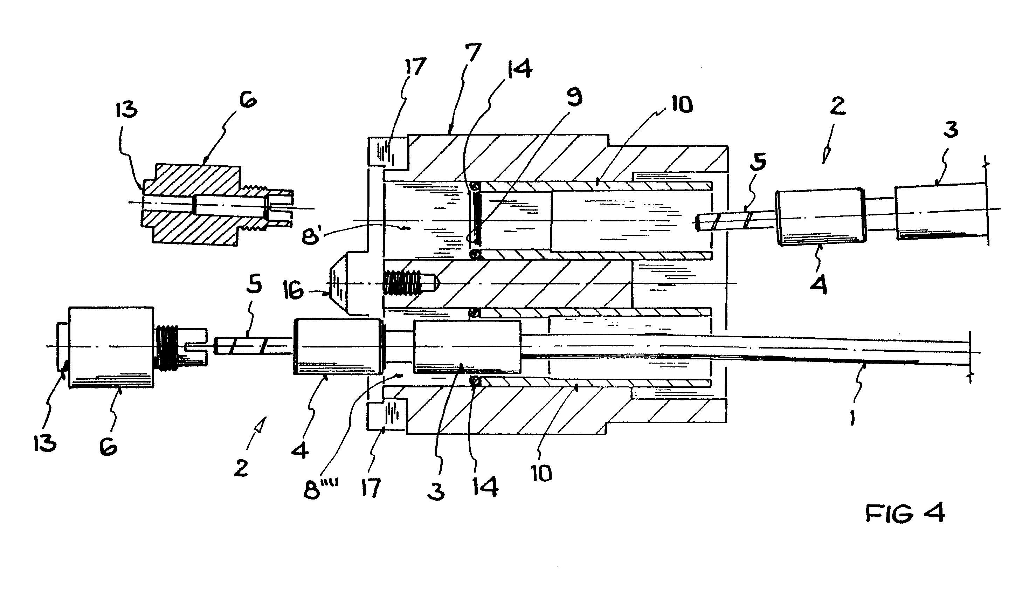

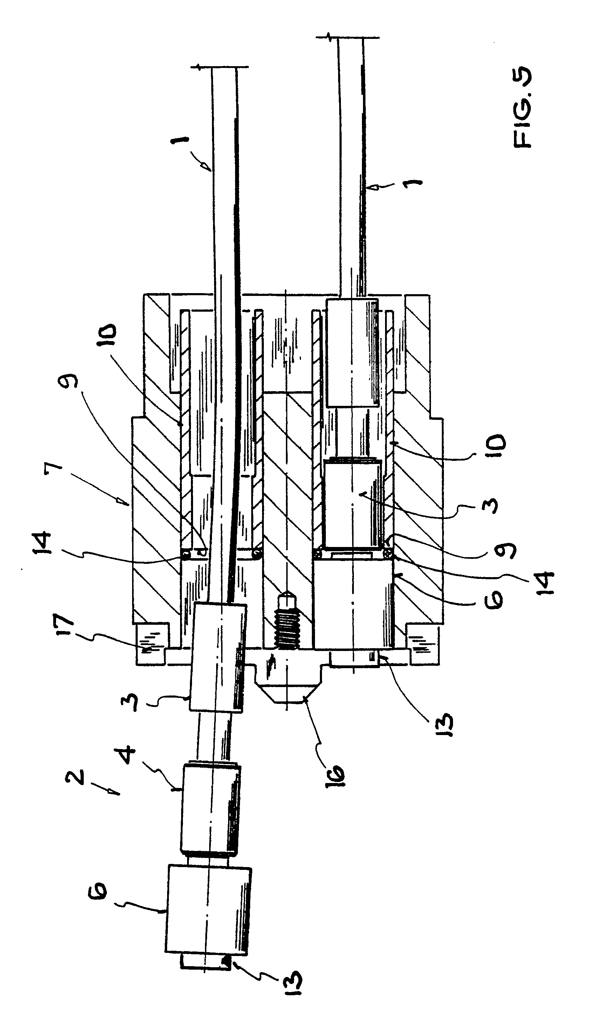

Zur Bestückung des Kopplungselementes 7 werden die optischen Stecker 2 gemäß der Figur 4, die ein Beispiel für einen Stecker 2 zeigt, von einer Seite aus (von rechts nach links) durch die Bohrungen (8', 8'', 8''', 8'''') des Kopplungselementes 7 geschoben, und zwar gemäß Figur 5 (oberer Teil) so weit, daß sie auf der anderen Seite des Kopplungselementes 7 erscheinen und auf die durchgeschobenen Stecker 2 gemäß der Figur 5 (Beispiel für einen Stecker) die Linsenkörper 6 (Linsenaufsätze) aufgesteckt bzw. aufgeschraubt werden können. Nach dem Aufstecken bzw. Aufschrauben der Linsenkörper 6 werden die Stecker 2 in die Bohrungen (8', 8'', 8''', 8'''') zurückgeschoben, wie es die Figur 5 im unteren Teil für einen Stecker zeigt. Das Zurückschieben des Steckers in die dazugehörige Bohrung erfolgt bis zum Anschlag mit einem Federring 14, der sich zwischen der unteren Stirnfläche des Linsenkörpers 6 und einer Anschlagfläche 9 befindet. Der Anschlag 9 im Inneren der Bohrungen wird durch eine Zweistufenbohrung oder durch Hülsen 10 gebildet, die in die Bohrungen gemäß den Figuren 4 und 5 eingebracht sind. Durch den Anschlag 9 in den Bohrungen werden die Stecker 2 bzw. die Linsenkörper 6 in den Bohrungen (8', 8'', 8''', 8'''') so fixiert, daß die Stirnflächen der Linsenkörper in einer bestimmten Ebene liegen. Der Durchmesser der Bohrungen (8', 8'', 8''', 8'''') ist so bemessen, daß die Linsenkörper 6 einen Paßsitz in den Bohrungen haben. Außerdem ist die Lage der Bohrungen so gewählt, daß im Fangbereich der Klauen keine Optik zerstört werden kann.

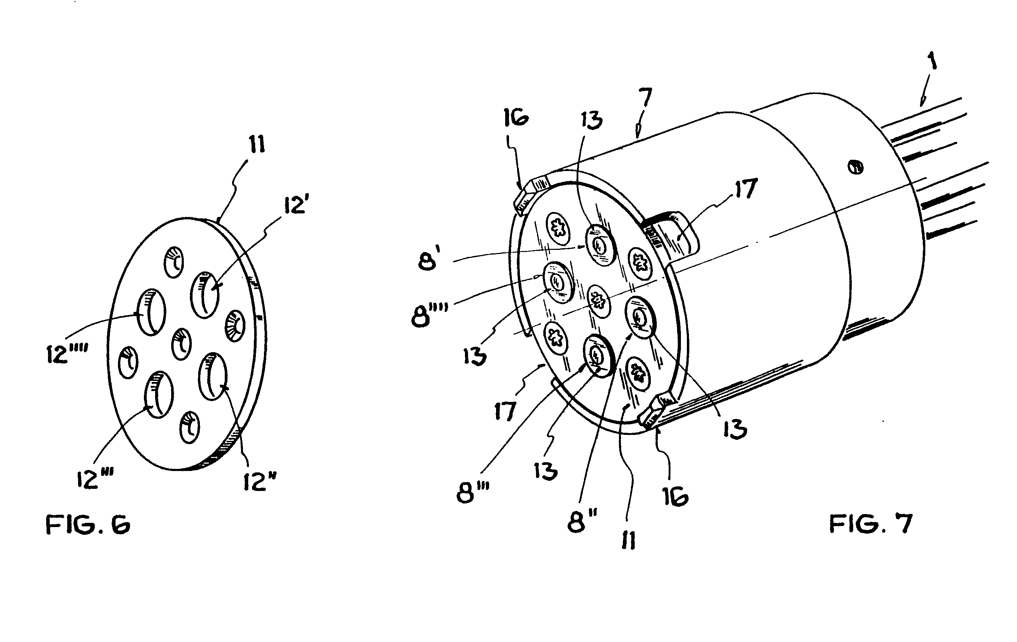

Wie die Figur 7 zeigt, wird das Kopplungselement 7 auf derjenigen Seite, auf der das Licht austritt, mit einem Deckel 11 abgeschlossen, der entsprechend den vier Bohrungen im Kopplungselement 7 gemäß der Figur 6 vier Bohrungen (12', 12'', 12''', 12'''') aufweist, die das Licht aus den Linsenkörpern 6 austreten lassen. Um die Linsenkörper 6 auch im Bereich ihrer oberen Stirnflächen mit Hilfe des Deckels 11 fixieren zu können, ist auf der oberen Stirnseite des Linsenkörpers 6 gemäß der Figur 2 ein Vorsprung 13 vorgesehen, der aus der oberen Stirnfläche der Linsenkörper 6 heraustritt und einen kleineren Durchmesser hat als die gesamte obere Stirnfläche. Die Durchmesser der Deckelbohrungen (12', 12'', 12''', 12'''') sind den Durchmessern der Vorsprünge 13 angepaßt. Ist das Kopplungselement 7 gemäß der Figur 7 durch den Deckel 11 abgeschlossen, so erstrecken sich die Vorsprünge 13 der Linsenkörper 6 in die Bohrungen (12', 12", 12"', 12"") des Deckels 11, während der Deckel 11 auf die die Vorsprünge 13 umgebenden Bereiche der Stirnflächen der Linsenkörper 6 drückt. Die Fixierung der Linsenkörper 6 erfolgt also auf der einen Seite durch die in den Bohrungen (8', 8", 8"', 8"") des Kopplungselementes 7 befindlichen Anschläge (9), und auf der anderen Seite durch den Deckel 11.

Gemäß einer Weiterbildung der Erfindung befinden sich, wie bereits erwähnt, in den Bohrungen (8', 8", 8"', 8"") des Kopplungselementes 7 Federelemente 14 (z. B. O-Ringe), die gemäß den Figuren 4 und 5 zwischen den Anschlagflächen 9 und den Linsenkörpern angeordnet sind. Die Federelemente 14 sorgen dafür, daß die Linsenkörper 6 gegen den Deckel 11 gedrückt werden. Der Deckel 11 ist im Ausführungsbeispiel mit dem Kopplungselement 7 verschraubt. Im gestreckten Zustand dürfen die einander gegenüberliegenden Linsensysteme einander nicht berühren, sondern es muß ein kleiner Spalt zwischen den Stirnflächen der Linsensysteme vorhanden sein. Um diese Bedingung zu gewährleisten, liegt im montierten Zustand (Deckel 11 aufgeschraubt) die Ebene, die durch die nach aussen weisende Stirnfläche des Deckels 11 und durch die Stirnflächen der Linsensysteme gebildet wird, etwas tiefer als diejenige Ebene, in der sich der obere Rand des Kopplungselementes (Hülse) 7 befindet. Dieser Sachverhalt ist den Figuren 7 und 8 zu entnehmen.

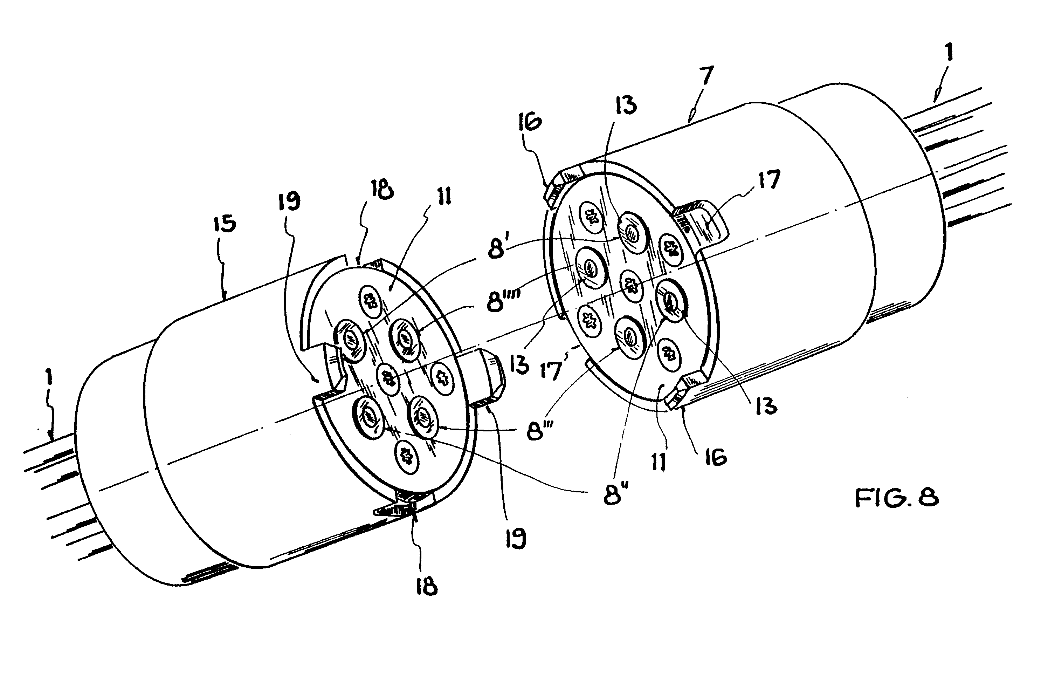

Diejenigen optischen Kabel, die mit den im Kopplungselement 7 befindlichen optischen Kabeln zu verbinden sind, sind im Verbindungsbereich gemäß der Figur 8 ebenfalls in einem Kopplungselement (15) (linkes Kopplungselement) angeordnet, und zwar im allgemeinen in der gleichen Weise, wie es in Verbindung mit den Figuren 1 bis 7 beschrieben wurde. Zur Herstellung einer lösbaren Verbindung zwischen den beiden Kopplungselementen 7 und 15 enthält das Kopplungselement 7 gemäß der Figur 8 Klauen 16 und Ausnehmungen 17 und das Kopplungselement 15 Ausnehmungen 18 und Klauen 19. Im Zustand der Verbindung greifen die Klauen der beiden Kopplungselemente in die entsprechenden Ausnehmungen der Kopplungselemente ein.

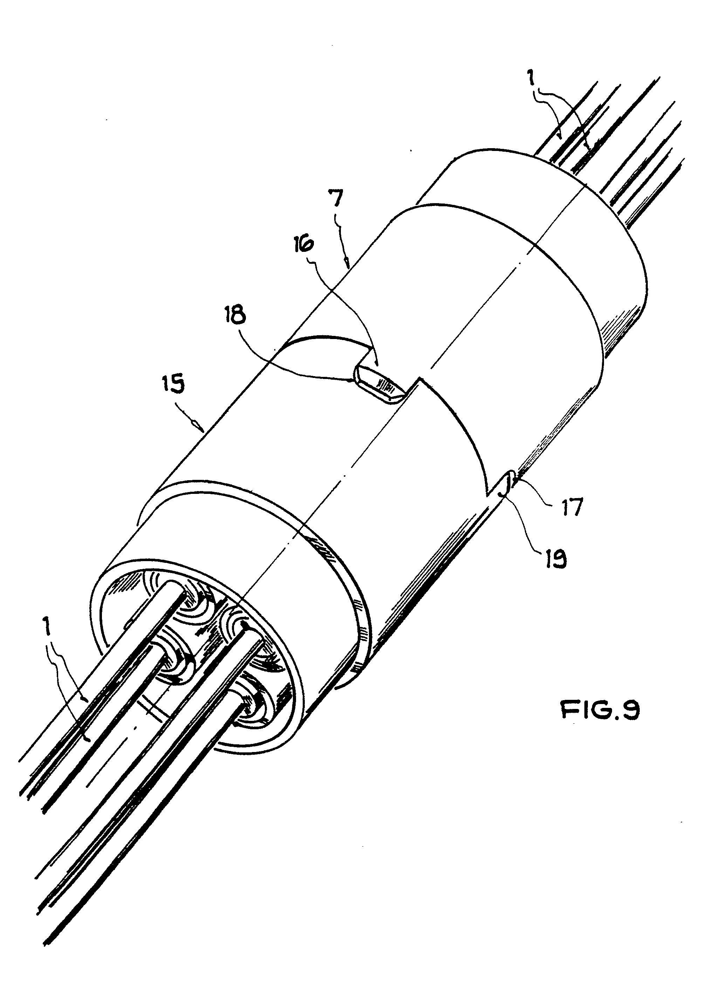

Die Figur 9 zeigt die miteinander verbundenen Kopplungselemente 7 und 15. Die Verbindung zwischen den beiden Kopplungselementen (7, 15) kann auch fest sein, doch soll eine feste Verbindung wieder lösbar sein, und zwar beispielsweise durch Verwendung einer Schraubverbindung oder eines Bajonettverschlusses.

Die Erfindung hat den Vorteil, daß durch einen Steckvorgang gleichzeitig mehrere optische Kanäle miteinander verbunden werden können. Bei Verwendung von Linsensystemen machen sich Umwelteinflüsse wie Tau oder Schmutz weniger bemerkbar. Linsensysteme ermöglichen auch größere mechanische Toleranzen. Die Verwendung der erfindungsgemäßen Kopplungselemente ermöglicht die Benutzung üblicher Stecker bzw. Leitungen mit Standard-Steckern sowie eine Bestückung von vorne, ohne daß das Kopplungselement (Hülse) ausgebaut werden muß. Die Erfindung ermöglicht bei Defekten eine modulare Bestückung, und zwar bezüglich der Leitungen, Stecker, Linsenaufsätze oder des ganzen Systems. Die Erfindung ermöglicht weiterhin einen Einbau in Systeme ohne LWL-Kabel, und erfordert einen relativ geringen Justieraufwand. Da der Deckel und die Stirnflächen der Linsensysteme in einer Ebene liegen, ist eine unproblematische Reinigung der Stirnflächen und damit der Linsensysteme möglich.

## Patentansprüche

1. Optische Verbindung für Lichtwellenleiter, bei der die Lichtwellenleiter duch eine Steckverbindung miteinander verbunden werden, dadurch gekennzeichnet, daß Kopplungselemente vorgesehen sind, in die die Steckverbindungselemente einsteckbar sind.

2. Optische Verbindung nach Anspruch 1, dadurch gekennzeichnet, daß ein Kopplungselement für die Stecker der Steckverbindung und ein Kopplungselement für die Gegenstecker der Steckverbindung vorgesehen sind.

3. Optische Verbindung nach Anspruch 1 oder 2, dadurch gekennzeichnet, daß ein Kopplungselement aus einem Körper besteht, der soviele Bohrungen aufweist, wie Steckverbindungen vorgesehen sind.

4. Optische Verbindung nach einem der Ansprüche 1 bis 3, dadurch gekennzeichnet, daß die Bohrungen im Kopplungselement Stufenbohrungen aufweisen.

5. Optische Verbindung nach einem der Ansprüche 1 bis 4, dadurch gekennzeichnet, daß zur Erzielung einer Stufenbohrung in die Bohrungen Buchsen eingebracht sind.

6. Optische Verbindung nach einem der Ansprüche 1 bis 5, dadurch gekennzeichnet, daß die Steckverbindungen Steckerstifte aufweisen und daß auf die Steckerstifte Linsenkörper aufgebracht sind.

7. Optische Verbindung nach einem der Ansprüche 1 bis 6, dadurch gekennzeichnet, daß die Übergangsstelle zwischen den unterschiedlichen Bohrungen im Kopplungselement als Anschlag für die Linsenkörper dient.

8. Optische Verbindung nach einem der Ansprüche 1 bis 7, dadurch gekennzeichnet, daß zwischen dem Anschlag und der Stirnfläche des Linsenkörpers ein Federelement vorgesehen ist.

9. Optische Verbindung nach einem der Ansprüche 1 bis 8, dadurch gekennzeichnet, daß die Kopplungselemente durch einen Deckel abgeschlossen sind, der Bohrungen entsprechend der Anzahl der Bohrungen im Kopplungselement aufweist.

10. Optische Verbindung nach einem der Ansprüche 1 bis 9, dadurch gekennzeichnet, daß die Linsenkörper Vorsprünge aufweisen, die in Bohrungen des Deckels eingreifen.

11. Optische Verbindung nach einem der Ansprüche 1 bis 10, dadurch gekennzeichnet, daß die Kopplungselemente Ausnehmungen und Klauen aufweisen, die zur Vebindung von Kopplungselementen dienen.

FIG.1

FIG.2

FIG.3a

FIG. 3b

FIG 4

FIG. 5

FIG. 7

FIG. 6

FIG.8

FIG.9